# EUROPEAN PATENT SPECIFICATION

(11) **EP 3 724 276 B1**
(45) Date of publication and mention of the grant of the patent: **11.10.2023**
(21) Application number: 18738338.5
(22) Date of filing: 13.07.2018
(51) Int. Cl.: C09D 5/16

(54) **FOUL RELEASE COATING COMPOSITION, SUBSTRATE COATED WITH SUCH COATING COMPOSITION, AND USE OF SUCH COATING COMPOSITION**
FÄULNISTRENNSCHICHTZUSAMMENSETZUNG, MIT SOLCH EINER BESCHICHTUNGSZUSAMMENSETZUNG BESCHICHTETES SUBSTRAT UND VERWENDUNG SOLCH EINER BESCHICHTUNGSZUSAMMENSETZUNG
COMPOSITION DE REVÊTEMENT ANTI-SALISSURES, SUBSTRAT REVÊTU DE CETTE COMPOSITION DE REVÊTEMENT ET UTILISATION D'UNE TELLE COMPOSITION DE REVÊTEMENT

(30) Priority: 14.12.2017 EP 17207444
(43) Date of publication of application: 21.10.2020
(73) Proprietor: Akzo Nobel Coatings International B.V., 1077 WW Amsterdam (NL)
(72) Inventor: SINCLAIR-DAY, John David, Rowlands Gill, Tyne and Wear NE39 2AG (GB); REYNOLDS, Kevin John, Gateshead, Tyne and Wear NE10 8BU (GB); CAIRNS, Cait Marie, North Shields, Tyne and Wear NE30 4JP (GB); HAMILTON, Lindsay, Durham DL15 0UN (GB); PARRY, Alison Louise, Durham DH1 2DS (GB); DUNFORD, Graeme, South Shields, Tyne and Wear NE34 6NQ (GB); PRICE, Clayton, Whitley Bay, Tyne and Wear NE25 9JY (GB)
(74) Representative: Akzo Nobel IP Department
(86) International application number: PCT/EP2018/069081
(87) International publication number: WO 2019/115020

(56) References cited:
- WO-A1-2012/146023
- WO-A1-2015/131032
- WO-A1-2015/190526
- WO-A1-2016/066566

## Description

### Field of the Invention

The present invention relates to a non-aqueous liquid foul release coating composition for controlling aquatic biofouling on man-made objects, to a substrate coated with such coating composition, and to use of such coating composition to control aquatic biofouling on man-made objects.

### Background of the Invention

Man-made structures such as ship and boat hulls, buoys, drilling platforms, dry dock equipment, oil production rigs, aquaculture equipment and netting and pipes which are immersed in water, or have water running through them, are prone to fouling by aquatic organisms such as green and brown algae, barnacles, mussels, and the like. Such structures often are of metal, but may also be made of other structural materials such as concrete, glass re-enforced plastic or wood. Such fouling is a nuisance on ship and boat hulls, because it increases frictional resistance during movement through the water. As a consequence speed is reduced and fuel consumption increased. It is a nuisance on static structures such as the legs of drilling platforms and oil and gas production, refining and storage rigs, firstly because the resistance of thick layers of fouling to waves and currents can cause unpredictable and potentially dangerous stresses in the structure, and, secondly, because fouling makes it difficult to inspect the structure for defects such as stress cracking and corrosion. It is a nuisance in pipes such as cooling water intakes and outlets, because the effective cross-sectional area is reduced by fouling, with the consequence that flow rates are reduced.

It is known, that coatings with polysiloxane-based resins resist fouling by aquatic organisms. Such coatings are for example disclosed in GB 1307001 and US 3,702,778. It is believed that such coatings present a surface to which the organisms cannot easily adhere, and they can accordingly be called fouling release or fouling resistant rather than anti-fouling coatings. Silicone rubbers and silicone compounds generally have very low toxicity.

In WO 2014/131695 is described an anti-fouling composition comprising a curable organosiloxane-containing polymer and a fluorinated oxyalkylene-containing polymer or oligomer.

Coating compositions based on curable polysiloxane resins are relatively soft at room temperature. In order to improve the mechanical properties of polysiloxane coatings, polysiloxane based coatings have been blended or crosslinked with stronger polymers such as epoxy resins or polyurethanes.

In WO 2012/146023 is disclosed a one-package moisture curable coating composition comprising 10-99 wt% silane terminated polyurethane and 1-90 wt% silane terminated polysiloxane. The polyurethane and the polysiloxane self-crosslink to form an organic-inorganic hybrid network. Microphase separation occurs at the surface and polysiloxane forms a surface structure with low surface energy that provides foul release properties.

In WO 2013/107827 is disclosed a coating composition, for use as a tie coat or a top coat in a foul release coating, comprising a curable polysiloxane and a silane terminated polyurethane. The curable polysiloxane and the silane terminated polyurethane are designed to co-cure.

Although very good in providing foul release properties, an important disadvantage of polysiloxane resins is that many other resins do not adhere to surfaces contaminated with polysiloxane resins. So, if a surface is contaminated with polysiloxane resin due to overspray or spilling of a polysiloxane-based coating, such surface has to be cleaned before a primer or other coating can be applied to it. Contamination of coating compositions based on non-polysiloxane based resins with a small amount of a polysiloxane-based composition, also has a negative impact on aesthetics of the coating. It typically causes pin hole and fish eye effects. Therefore, separate equipment for polysiloxane-based and non-polysiloxane-based coating has to be used. Even coating compositions containing a very small amount of polysiloxane resin give rise to contamination issues.

Therefore, there is a need in the art for foul release coating compositions that do not give rise to contamination issues whilst having good foul release and mechanical properties.

### Summary of the Invention

Surprisingly it has now been found that a non-aqueous foul release coating composition can be provided by using a resin system (A) comprising certain organic polymer backbones with terminal and/or pendant alkoxysilyl groups, and a marine biocide and/or a non-curable, non-volatile compound selected from the group consisting of fluorinated polymers, sterols and sterol derivatives, and hydrophilic-modified polysiloxane oils as a further fouling protection compound (B), wherein the coating composition is essentially free of curable polysiloxane resins and is essentially free of non- curable polysiloxanes other than non-curable hydrophilic-modified polysiloxane oils.

Accordingly, in a first aspect the invention provides a non-aqueous foul release coating composition for controlling aqueous biofouling on man-made objects, comprising:
(A) a curable resin system comprising
   i) a curable polymer free of fluorine atoms and having a backbone selected from a polyurethane, a polyether, a polyester, a polycarbonate or a hybrid of two or more thereof, and having at least one terminal or pendant alkoxysilyl group of formula

      -(CₘH₂ₘ)-Si(R¹)₍₃₋ₙ₎(OR²)ₙ (I)

      wherein:
      n is 1, 2 or 3, preferably 2 or 3;
      each of R¹ and R² is, independently, an alkyl radical having 1 to 6 carbon atoms, preferably 1 to 4 carbon atoms;
      m is an integer with a value in the range of from 1 to 20, and
   ii) optionally a curing agent and/or a catalyst; and
(B) a marine biocide and/or a non-curable, non-volatile compound selected from the group consisting of fluorinated polymers, sterols and sterol derivatives, and hydrophilic-modified polysiloxane oils,
wherein the coating composition is essentially free of a curable polysiloxane, and wherein the coating composition is essentially free of non- curable polysiloxanes other than non-curable hydrophilic-modified polysiloxane oils.

The coating composition according to the invention provides coatings with foul release properties that are similar to or even better than coating based on polysiloxane resins. The coating composition, moreover, provides coatings with ice-release properties. An important advantage of the coating composition according to the invention is that surfaces contaminated with small amounts of the coating composition can be coated with a primer or a topcoat without a negative impact on adhesion or aesthetics. A further advantage is that it provides coatings with improved mechanical properties, in particular abrasion resistance, compared to coatings based on polysiloxane resins.

In a second aspect, the invention provides a substrate coated with a foul release coating composition according to the first aspect of the invention. Preferably, the substrate is coated with a multi-layer coating system comprising a tie-coat layer deposited from a tie-coat composition comprising a binder polymer with alkoxysilyl functional groups and a topcoat layer deposited from the foul release coating composition according to the first aspect of the invention.

After the foul release coating composition has been applied to a substrate and dried, cured or crosslinked, the coated substrate can be immersed and gives protection against fouling. As indicated above, the foul release coating composition according to the present invention provides coatings with very good fouling-resistant and foul release properties. This makes these coating compositions very suitable for coating objects that are immersed in an aquatic environment, such as marine and aquaculture applications. The coating can be used for both dynamic and static structures, such as ship and boat hulls, buoys, drilling platforms, oil production rigs, floating production storage and offloading vessels (FPSO), floating storage and regasification units (FSRU), cooling water intake in power plants, fish nets or fish cages and pipes which are immersed in water.

Accordingly, the invention provides in a third aspect a process for controlling aquatic biofouling on a surface of a man-made object, comprising the steps of
(a) applying a foul release coating composition according to the first aspect of the invention to at least a part of the surface of the man-made object;
(b) curing the foul release coating composition to form a cured foul release coating layer; and
(c) immersing the man-made object at least partly in water.

In a final aspect, the invention provides use of a foul release coating composition according to the first aspect of the invention to control aquatic biofouling on man-made objects.

### Detailed description of the Invention

The foul release coating composition according to the invention is a non-aqueous liquid coating composition. It comprises a curable resin system (A) comprising i) a curable polymer and ii) optionally a curing agent (crosslinking agent) and/or a curing catalyst. To provide enhanced protection against fouling, the coating composition further comprises a marine biocide and/or a non-curable, non-volatile compound selected from the group consisting of fluorinated polymers, sterols and sterol derivatives, and hydrophilic-modified polysiloxane oils as component (B). The foul release coating composition may further comprise organic solvent, pigments, and one of more additives commonly used in non-aqueous liquid coating compositions. The coating composition system is essentially free of a curable polysiloxane and is essentially free of non-curable polysiloxanes other than non-curable hydrophilic-modified polysiloxane oils.

Reference herein to a curable polysiloxane is to a polymer with a backbone having Si-O-Si linkages, with at least some of the silicon atoms attached to a carbon atom, and having pendant and/or terminal cross-linkable functional groups. Reference herein to cross-linkable functional groups is to groups that can self-condense or condense with a cross-linking agent to form covalent cross-links when applied under normal conditions, typically at a temperature between -10 °C and 50 °C, such as for example pendant or terminal silanol, alkoxysilyl, acetoxysilyl or oximesilyl groups.

Reference herein to pendant groups is to lateral, i.e. non-terminal, groups.

Reference herein to 'essentially free of a compound' is to a composition comprising less than 0.5 wt%, preferably less than 0.1 wt% of such compound, more preferably a composition entirely free of such compound.

The foul release coating composition of the invention is a liquid coating composition. This means that the composition is liquid at ambient temperature and can be applied at ambient conditions to a substrate by well-known application techniques for liquids, such as brushing, rolling, dipping, bar application or spraying.

The coating composition is a non-aqueous coating composition. This means that the components of the resin system and other ingredients of the coating composition are provided, e.g. dissolved or dispersed, in a non-aqueous liquid medium. The coating composition may comprise an organic solvent to achieve the required application viscosity. Alternatively, the coating composition may be free of organic solvent, for example when the curable polymer, optionally after addition of a reactive diluent and/or liquid plasticizer, is a liquid of sufficiently low viscosity. The coating composition may comprise a small amount of water, for example water unintentionally introduced with other components of the coating composition, such as pigments or organic solvents, which contain low amounts of water as impurity. The coating composition preferably comprises less than 5 wt% of water, more preferably less than 2 wt%, based on the total weight of the composition. Even more preferably, the composition is free of water.

The curable polymer (i) has a backbone that is a polyurethane, a polyether, polyester, a polycarbonate, or a hybrid of two or more thereof. Reference herein to a polyurethane backbone is to a backbone with urethane linkages. Such backbone is formed by reacting a mixture of polyol and polyisocyanate, preferably di-isocyanate. Any suitable polyol or polyisocyanate may be used. Suitable polyols for examples include polyester polyol, polyether polyol, polyoxyalkylene polyols, acrylic polyol, polybutadiene polyol, natural oil derived polyols. In case the polyol is a polyether polyol, the polymer backbone has both urethane and ether linkages and is referred to herein as a polyether/polyurethane hybrid. In case the polyol is a polyester polyol, the polymer backbone has both urethane and ester linkages and is referred to herein as a polyester/polyurethane hybrid. Preferably, the curable polymer (i) has a backbone that is a polyurethane, a polyether, or a polyether/polyurethane hybrid.

The curable polymer (i) has at least one alkoxysilyl terminal or pendant group of formula (I):

-(CₘH₂ₘ)-Si(R¹)₍₃₋ₙ₎(OR²)ₙ (I)

wherein:
n is 1, 2 or 3, preferably 2 or 3;
each of R¹ and R² is, independently, an alkyl radical having 1 to 6 carbon atoms, preferably 1 to 4 carbon atoms;
m is an integer with a value in the range of from 1 to 20.

Bivalent saturated hydrocarbon radical CₘH₂ₘ is linking alkoxysilyl group - Si(R¹)₍₃₋ₙ₎(OR²)ₙ to the backbone of curable polymer i), preferably via a urethane or urea linkage. Preferably, m is an integer with a value in the range of from 1 to 6. More preferably, m is 1 or 3. If m is 1, the curable alkoxysilyl group(s) are in the alpha position to the urethane or urea linkage. Such alpha position provides higher reactivity of the alkoxysilyl group(s) and therewith higher curing rates.

The alkoxysilyl terminal or pendant group may have one, two or three alkoxy groups OR², preferably two or three alkoxy groups (n is 2 or 3). The alkoxy groups OR² preferably are methoxy or ethoxy groups (R² being a methyl or ethyl radical). In case of one or two alkoxy groups, two or one alkyl radicals R¹ are attached to the silicon atom, respectively. R¹ is an alkyl radical having 1 to 20 carbon atoms, preferably 1 to 6 carbon atoms. More preferably, R¹ is a methyl or ethyl radical.

Preferably, curable polymer (i) has at least one terminal alkoxysilyl group of formula (I), more preferably at least two terminal alkoxysilyl groups of formula (I).

Curable polymer (i) is free of fluorine atoms and may be linear or branched. Preferably, curable polymer (i) is essentially linear and has two terminal alkoxysilyl groups of formula (I). The curable polymer (i) may have pendant and terminal alkoxysilyl groups of formula (I).

Curable polymers with an organic polymer backbone and alkoxysilyl groups of formula (I) are known in the art and for example described in US 5,990,257. Such polymers may for example be prepared by reacting an isocyanate functionalized alkoxysilane with a hydroxyl-terminated prepolymer such as a polyether polyol, a polyurethane polyol or a polyether-polyurethane hybrid polyol or by reacting an amino alkoxysilane with an isocyanate terminated prepolymer, such as an isocyanate terminated polyurethane or polyether-polyurethane hybrid. Commercially available examples of such curable polymers include GENIOSIL ^{®} STP-E (ex. Wacker), Desmoseal S XP 2636, Desmoseal S XP 2749 (ex. Covestro), TEGOPAC SEAL 100, Polymer ST 61 LV and Polymer ST 80 (ex. Evonik).

The resin system may comprise a further curable polymer other than curable polymer (i). If such further curable polymer is present, the further curable polymer preferably is a curable polymer comprising pendant and/or terminal alkoxysilyl functional groups, for example a poly(meth)acrylate comprising pendant alkoxysilyl groups. Such further curable polymer comprising pendant and/or terminal alkoxysilyl functional groups may be present in an amount up to 80 wt%, preferably up to 70 wt%, more preferably in the range of from 10 to 60 wt%, based on the total weight of curable polymer (i) and any further curable polymer with alkoxysilyl functional groups.

The coating composition may comprise a further curable polymer without alkoxysilyl functional groups. Such further curable polymer without alkoxysilyl functional groups is preferably present in an amount less than 50 wt% based on the total weight of curable polymer (i) and any further curable polymer with alkoxysilyl functional groups, more preferably less than 30 wt%, even more preferably less than 10 wt%. Even more preferably, the resin system is essentially free of or entirely free of curable polymers without alkoxysilyl functional groups. The coating composition is essentially free of a curable polysiloxane.

The curable resin system preferably comprises a curing agent or a curing catalyst. The resin system may comprise both a curing agent and a curing catalyst.

The curing agent (also referred to as cross-linking agent) may be any curing agent suitable for crosslinking the terminal or pendant alkoxysilyl groups of curable polymer (i). Such curing agents are known in the art. Functional silanes are known as suitable curing agents. Preferred curing agents include tetra-alkoxy orthosilicates (also referred to as tetra-alkoxysilanes), such as for example tetra-ethylorthosilicate or partial condensates thereof, and organofunctional alkoxysilanes, such as amino alkoxysilanes, glycidoxy alkoxysilanes, methacryloxy alkoxysilanes, carbamato alkoxysilanes, and alkoxysilanes with an isocyanurate functional group. Examples of particularly suitable curing agents are tetra-ethylorthosilicate or partial condensates thereof, N-[3-(trimethoxysilyl)propyl]ethylenediamine, and (N,N-diethylaminomethyl) triethoxysilane.

The curing agent may be used in any suitable amount, typically up to 10 wt% based on the total weight of the resin system (weight of curable polymer plus curing agent plus optional catalyst), preferably in the range of from 1 to 5 wt%.

In case an organofunctional alkoxysilane with the alkoxysilyl functionality in an alpha position to the organofunctional group is used as curing agent, the coating composition may be cured under ambient conditions in the absence of a curing catalyst. Suitable organofunctional alkoxysilanes with the alkoxysilyl functionality in an alpha position to the organofunctional group include alpha aminosilanes. (N,N-diethylaminomethyl)triethoxysilane is a particularly preferred alpha aminosilane.

Instead of a curing agent, or in addition to a curing agent, the resin system may comprise a curing catalyst. Any catalyst suitable for catalyzing the condensation reaction between silanol groups may be used. Such catalysts are well known in the art and include carboxylic acid salts of various metals, such as tin, zinc, iron, lead, barium, and zirconium. Such salts preferably are salts of long-chain carboxylic acids, for example dibutyltin dilaurate, dioctyltin dilaurate, dibutyltin dioctoate, iron stearate, tin (II) octoate, and lead octoate. Further examples of suitable catalysts include organobismuth, organotitanium compounds, organo-phosphates such as bis(2-ethylhexyl) hydrogen phosphate. Other possible catalysts include chelates, for example dibutyltin acetoacetonate, or compound comprising amine-ligands such as for example 1,8-diazabicyclo(5.4.0)undec-7-ene. The catalyst may comprise a halogenated organic acid which has at least one halogen substituent on a carbon atom which is in the [alpha]-position relative to the acid group and/or at least one halogen substituent on a carbon atom which is in the beta position relative to the acid group, or a derivative which is hydrolysable to form such an acid under the conditions of the condensation reaction. Alternatively, the catalyst may be as described in any of WO 2007/122325, WO 2008/055985, WO 2009/106717, WO 2009/106718.

The catalyst may be used in any suitable amount, preferably in the range of from 0.1 to 10 wt% based on the total weight of the resin system (weight of curable polymer plus optional curing agent plus catalyst), more preferably in the range of from 0.2 to 1.0 wt%.

If the curable resin system comprises a curing catalyst, the coating composition is preferably a two-component (2K) coating composition wherein the curing catalyst and the curable polymer of the curable resin system are provided in different components that are mixed shortly before application of the coating composition.

To provide enhanced protection against fouling, the coating composition comprises a marine biocide and/or a non-curable, non-volatile compound (an incompatible fluid). Reference herein to a non-curable compound is to a compound that does not participate in the curing reaction of curable polymer (i) or any further curing polymer in the resin system. Reference herein to non-volatile compounds is to compounds that do not boil at a temperature below 250 °C, at atmospheric pressure.

The non-curable, non-volatile compound is selected from the group consisting of fluorinated polymers, sterols and sterol derivatives, such as for example lanolin, lanolin oil, or acetylated lanolin, and hydrophilic-modified polysiloxane oils, such as poly(oxyalkylene)-modified polysiloxane oils.

Examples of suitable fluorinated polymers include linear and branched trifluoromethyl fluorine end-capped perfluoropolyethers (e.g. Fomblin Y^{®}, Krytox K^{®} fluids, or Demnum SO oils); linear di-organo (OH) end-capped perfluoropolyethers (eg Fomblin Z DOL^{®}, Fluorolink E^{®}); low molecular weight polychlorotrifluoroethylenes (eg Daifloil CTFE^{®} fluids); and fluorinated oxyalkylene-containing polymer or oligomer as described in WO 2014/131695. Non-curable hydrophilic-modified polysiloxane oils are known in the art and for examples described at pages 22 to 26 of WO 2013/000479, incorporated herein by reference for the description of such non-curable hydrophilic-modified polysiloxane oils. Such non-curable hydrophilic-modified polysiloxane oils do not comprise any terminal or lateral silanol, alkoxysilyl, or other silicon-reactive groups.

Preferably, the coating composition comprises a non-curable, non-volatile compound as defined herein above. More preferably, the coating composition comprises a non-curable, non-volatile compound selected from the group consisting of hydrophilic-modified polysiloxane oils, even more preferably from the group consisting of poly(oxyalkylene)-modified polysiloxane oils. Such poly(oxyalkylene)-modified polysiloxane oil may have pendant and/ terminal poly(oxyalkylene) groups and/or may have a polyoxyalkylene chain incorporated in its backbone. Preferably, the poly(oxyalkylene)-modified polysiloxane oil has pendant poly(oxyalkylene) groups.

The poly(oxyalkylene)-modified polysiloxane oil preferably comprises oxyalkylene moieties with 1 to 20 carbon atoms, more preferably with 2 to 6 carbon atoms, even more preferably comprises oxyethylene and/or oxypropylene moieties. The pendant, terminal or block co-polymerized poly(oxyalkylene) groups preferably comprise 1 to 50 oxyalkylene moieties, more preferably 2 to 20 oxyalkylene moieties. The polysiloxane oil may comprise in the range of from 1 to 100 pendant/terminal poly(oxyalkylene) groups and/or 1 to 100 copolymerized poly(oxyalkylene) blocks, preferably in the range of from 1 to 50, more preferably of from 2 to 20. A particularly suitable hydrophilic-modified polysiloxane oil is a polydimethylsiloxane comprising pendant poly(oxyethylene) groups and comprising pendant alkyl groups other than methyl groups.

The pendant or terminal oxyalkylene moieties are preferably linked to a silicon atom of the polysiloxane backbone via a divalent hydrocarbon group, preferably a divalent hydrocarbon group having 1 to 8 carbon atoms, more preferably three carbon atoms. The pendant or terminal poly(oxyalkylene) groups may be capped with any suitable group, preferably a hydroxyl, ether, or ester group, more preferably a hydroxyl group or an ether or ester group with two to 6 carbon atoms, such as for example an acetate group.

Commercially available examples of suitable hydrophilic-modified polysiloxane include DC5103, DC Q2-5097, DC193, DC Q4-3669, DC Q4-3667, DC-57 and DC2-8692 (all Dow Corning), Silube J208 (Siltech), and BYK333 (BYK). A non-curable, non-volatile compound may be added in any suitable amount, typically up to 20 wt% based on the total weight of the coating composition, preferably in the range of from 1 to 10 wt%, more preferably of from 2 to 7 wt%.

Reference herein to a marine biocide is to a chemical substance known to have chemical or biological biocidal activity against marine or freshwater organisms. Suitable marine biocides are well-known in the art and include inorganic, organometallic, metal-organic or organic biocides. Examples of inorganic biocides include copper compounds such as copper oxide, copper thiocyanate, copper bronze, copper carbonate, copper chloride, copper nickel alloys, and silver salts such as silver chloride or nitrate; organometallic and metal-organic biocides include zinc pyrithione (the zinc salt of 2-pyridinethiol-1-oxide), copper pyrithione, bis (N-cyclohexyl-diazenium dioxy) copper, zinc ethylene-bis(dithiocarbamate) (i.e. zineb), zinc dimethyl dithiocarbamate (ziram), and manganese ethylene-bis(dithiocarbamate) complexed with zinc salt (i.e. mancozeb); and organic biocides include formaldehyde, dodecylguanidine monohydrochloride, thiabendazole, N-trihalomethyl thiophthalimides, trihalomethyl thiosulphamides, N-aryl maleimides such as N-(2,4,6-trichlorophenyl) maleimide, 3-(3,4-dichlorophenyl)-1,1-dimethylurea (diuron), 2,3,5,6-tetrachloro-4-(methylsulphonyl) pyridine, 2-methylthio-4-butylamino-6-cyclopopylamino-s-triazine, 3-benzo[b]thien-yl-5,6-dihydro-1,4,2-oxathiazine 4-oxide, 4,5-dichloro-2-(n-octyl)-3(2H)-isothiazolone, 2,4,5,6-tetrachloroisophthalonitrile, tolylfluanid, dichlofluanid, diiodomethyl-p-tosylsulphone, capsciacin or a substituted capsciacin, N-cyclopropyl-N'-(1,1-dimethylethyl)-6-(methylthio)-1,3,5-triazine-2,4-diamine, 3-iodo-2-propynylbutyl carbamate, medetomidine, 1,4-dithiaanthraquinone-2,3-dicarbonitrile (dithianon), boranes such as pyridine triphenylborane, a 2-trihalogenomethyl-3-halogeno-4-cyano pyrrole derivative substituted in position 5 and optionally in position 1, such as 2-(p-chlorophenyl)-3-cyano-4-bromo-5-trifluoromethyl pyrrole (tralopyril), and a furanone, such as 3-butyl-5-(dibromomethylidene)-2(5H)-furanone, and mixtures thereof, macrocyclic lactones such as avermectins, for example avermectin B1, ivermectin, doramectin, abamectin, amamectin and selamectin, and quaternary ammonium salts such as didecyldimethylammonium chloride and an alkyldimethylbenzylammonium chloride.

Optionally, the biocide is wholly or partially encapsulated, adsorbed, entrapped, supported or bound. Certain biocides are difficult or hazardous to handle and are advantageously used in an encapsulated, entrapped, absorbed, supported, or bound form. Encapsulation, entrapment, absorption, support or binding of the biocide can provide a secondary mechanism for controlling biocide leaching from the coating system in order to achieve an even more gradual release and long lasting effect. The method of encapsulation, entrapment, adsorption, support or binding of the biocide is not particularly limiting for the present invention. Examples of ways in which an encapsulated biocide may be prepared for use in the present invention include mono and dual walled amino-formaldehyde or hydrolysed polyvinyl acetate-phenolic resin capsules or microcapsules as described in EP 1 791 424. An example of a suitable encapsulated biocide is encapsulated 4,5-dichloro-2-(n-octyl)-3(2H)-isothiazolone marketed by Dow Microbial Control as Sea-Nine 211N R397 Marine Antifouling Agent. Examples of ways in which an absorbed or supported or bound biocide may be prepared include the use of host-guest complexes such as clathrates as described in EP 709 358, phenolic resins as described in EP 880 892, carbon-based adsorbents such as those described in EP 1 142 477, or inorganic microporous carriers such as the amorphous silicas, amorphous aluminas, pseudoboehmites or zeolites described in EP 1 115 282.

In view of environmental and health concerns linked to the use of biocides in coatings for the prevention of aquatic biofouling, component (B) in the coating composition according to the invention is preferably not a marine biocide.

Therefore, in a preferred embodiment, the coating composition is essentially or entirely free of a marine biocide and enhanced protection against fouling is provided by a non-biocidal component, said non-biocidal component being a non-curable, non-volatile compound selected from the group consisting of fluorinated polymers, sterols and sterol derivatives, and hydrophilic-modified polysiloxane oils.

Suitable solvents for use in the coating composition include aromatic hydrocarbons, alcohols, ketones, esters, and mixtures of the above with one another or an aliphatic hydrocarbon. Preferable solvents include ketones such as methyl isopentyl ketone and/or hydrocarbon solvents, such as xylene, trimethyl benzene, or aliphatic cyclic or acyclic hydrocarbons, as well as mixture thereof.

The foul release coating composition may further comprise extender pigments (fillers) and/or color pigments and one or more additives commonly used in foul release coating compositions, such as wetting agents, dispersing agents, flow additives, rheology control agents, adhesion promoters, antioxidants, UV stabilizers, and plasticizers.

Examples of suitable extender pigments include barium sulphate, calcium sulphate, calcium carbonate, silicas or silicates (such as talc, feldspar, and china clay), including pyrogenic silica, bentonite and other clays. Some extender pigments, such as fumed silica, may have a thixotropic effect on the coating composition. The proportion of fillers may be in the range of from 0 to 25 wt%, based on the total weight of the coating composition. Preferably clay is present in an amount of 0 to 1 wt% and preferably the thixotrope is present in an amount of 0 to 5 wt%, based on the total weight of the coating composition.

Examples of color pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, chromium oxide, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes).

The composition may also comprises so-called barrier pigments or anticorrosive pigments such as zinc dust or zinc alloys, or so-called lubricious pigments such as graphite, molybdenum disulfide, tungsten disulphide or boron nitride.

The pigment volume concentration of the coating composition preferably is in the range of 0.5-25%. The total amount of pigments may be in the range of from 0 to 25 weight %, based on the total weight of the coating composition.

The coating composition preferably has a non-volatile content, defined as the weight percentage of non-volatile material in the coating composition, of at least 35 weight %, more preferably at least 50 weight %, even more preferably at least 70 weight %. The non-volatile content can range up to 80 weight %, 90 weight %, 95 weight % and preferably up to 100 weight %. The non-volatile content may be determined in accordance with ASTM method D2697.

The invention further relates to a substrate coated with a foul release coating composition according to the first aspect of the invention. The foul release coating composition can be applied by known techniques for applying liquid coating compositions, such as brush, roller, dipping, bar or spray (airless and conventional) application.

The substrate may be a surface of a structure to be immersed in water, such as metal, concrete, wood, or polymeric substrates. Examples of polymeric substrates are polyvinyl chloride substrates or composites of fiber-reinforced resins. In an alternative embodiment, the substrate is a surface of a flexible polymeric carrier foil. The coating composition is then applied to one surface of a flexible polymeric carrier foil, for example a polyvinyl chloride carrier foil, and cured, and subsequently the non-coated surface of the carrier foil is laminated to a surface of a structure to be provided with fouling-resistant and/or foul release properties, for example by use of an adhesive.

To achieve good adhesion to the substrate it is preferred to apply the fouling-release coating composition to a substrate that is provided with a primer layer and/or a tie-coat layer. The primer layer may be deposited from any primer composition known in the art, for example an epoxy resin-based or polyurethane based primer composition. More preferably, the substrate is provided with a tie-coat layer deposited from a tie-coat composition, before applying a foul release coating layer deposited from the fouling-release coating composition according to the invention. The tie-coat composition may be applied to the bare substrate surface, to a primed substrate surface or to a substrate surface containing an existing layer of anti-fouling or foul release coating composition.

Tie-coat compositions are known in the art. In a preferred embodiment, the tie-coat layer is deposited from a tie-coat composition comprising a binder polymer with alkoxysilyl functional groups capable of reacting with the pendant or terminal alkoxysilyl group(s) of curable polymer (i). Such tie-coat compositions are known in the art and for example described in WO 99/33927.

The binder polymer with curable alkoxysilyl functional groups in the tie-coat composition may be any suitable binder polymer, for example polyurethane, polyurea, polyester, polyether, polyepoxy, or a binder polymer derived from ethylenically unsaturated monomers such as a polyacrylate. Preferably, the binder polymer is a polyacrylate with curable alkoxysilyl functional groups. Reference herein to polyacrylate is to a polymer obtainable by radical polymerisation of acrylate and/or (meth)acrylate monomers.

The alkoxysilyl functional groups preferably have the following general formula:

-(CₘH2ₘ)-Si(R¹)₍₃₋ₙ₎(OR²)ₙ

wherein n, R¹, R² and m are as defined herein above for formula (I). Preferably, n is 2 or 3. Each of R¹ and R² is, independently, preferably an alkyl radical having 1 to 4 carbon atoms, more preferably ethyl or methyl. Preferably, m is an integer with a value in the range of from 1 to 6. More preferably, m is 1 or 3, even more preferably m is 1.

In a particularly preferred embodiment, the binder polymer in the tie-coat composition is prepared by radical polymerisation of a mixture of acrylate and/or (meth)acrylate monomers of which at least one has alkoxysilyl functionality, such as for example 3-(trimethoxysilylpropyl) methacrylate or trimethoxysilylmethyl methacrylate. An example of such monomer mixture is a mixture of methyl methacrylate, lauryl methacrylate and trimethoxysilylmethyl methacrylate.

Preferably, the binder polymer in the tie-coat composition does not have crosslinkable functional groups other than the alkoxysilyl functional groups.

### Examples

The invention will be further illustrated by means of the following non-limiting examples.

The following compounds were used in the examples.

### Curing agents

Gamma-aminosilane: N-[3-(trimethoxysilyl)propyl]ethylenediamine
Alpha-aminosilane: (N,N-diethylaminomethyl)triethoxysilane
Tetraethylorthosilicate (TEOS)

### Curing catalysts

DBU: 1,8-diazabicyclo(5.4.0)undec-7-ene
Zinc catalyst: K-KAT^{®} 670 (ex. King Industries)
Acid catalyst: bis(2-ethylhexyl) hydrogen phosphate

### Curable polymers

See Table 1.

### EXAMPLE 1 - curing of different polymers with silane functional groups

The curability of different, commercially available curable polymers with terminal or pendant alkoxysilyl functional groups was determined by mixing such polymers with different amounts of gamma-aminosilane or alpha-aminosilane as curing agent, or with 0.5 wt% of a curing catalyst. A 200 µm draw down of the mixture was applied on a glass panel, and the applied layer was allowed to cure at ambient conditions (23 °C, 50 % relative humidity).

The time to hard dry was determined. Hard dry means that no visible marks are made when the coating is firmly touched with a finger and the finger is rotated 180 °. After 24 hours or 1 week, the test was stopped and the drying state (wet, tacky, touch dry or hard dry) was determined.

The results are shown in Tables 2 and 3.

**Table 1 - Curable polymers used**

| Polymer name | backbone | Alkoxysilyl group | |
|---|---|---|---|
| GENIOSIL ^{®} STP-E10 | polyether | dimethoxy(methyl)silyl methylcarbamate | terminal |
| GENIOSIL ^{®} STP-E15 | polyether | trimethoxysilyl propylcarbamate | terminal |
| GENIOSIL ^{®} STP-E30 | polyether | dimethoxy(methyl)silyl methylcarbamate | terminal |
| GENIOSIL ^{®} STP-E35 | polyether | trimethoxysilyl propylcarbamate | terminal |
| Desmoseal S XP 2749 | polyurethane | trialkoxysilylpropyl | terminal |
| Polymer ST 61LV | urethane/polyether hybrid | trimethoxysilyl | terminal |
| TEGOPAC SEAL 100 | polyether | triethoxysilyl | pendant |

**Table 2 - Cure times until hard dry for different polymers with alpha aminosilane as curing agent or curing catalyst**

| Polymer | Alpha amino silane (wt% on wet weight) | | | Catalyst (0.5 wt%) | | |
|---|---|---|---|---|---|---|
| | 1.0 wt% | 5.0 wt% | 10 wt% | DBU | acid | zinc |
| STP-E 10 | < 24 h | 3 h | 3 h | 5 min | 1h | 1h |
| STP-E 15 | 1 week: tacky | < 24 h | < 24 h | 15 min | 5h | 7h |
| S XP 2749 | < 24 h | < 24 h | < 24 h | 30 min | 5h | 5h |
| ST 61 LV | | | | 10 min | 3h | 7h |
| SEAL 100 | | | no cure after 1 week | tacky after 24h | | 24h* |

| | | | | | | |
|---|---|---|---|---|---|---|
| * still some surface tackiness | | | | | | |

**Table 3 - Drying state after 24 hours with gamma aminosilane or amino aminosilane as curing agent**

| Polymer | Gamma amino silane | | | Alpha amino silane | | |
|---|---|---|---|---|---|---|
| | 3 wt% | 5 wt% | 10 wt% | 1 wt% | 5 wt% | 10 wt% |
| S XP 2749 | tacky | touch dry^{a} | hard dry^{b} | hard dry | hard dry | hard dry |

| | | | | | | |
|---|---|---|---|---|---|---|
| ^{a} tacky underneath; ^{b} wrinkled surface | | | | | | |

### EXAMPLE 2 - Foul release performance

The foul release properties of different coatings were determined in a so-called slime farm test. Different coatings were applied on glass microscope slides. The coated slides were immersed in seawater for 2 weeks to remove any residual solvent. The coated slides were then placed in the recirculation reactor of a multispecies slime culturing system. This is a recirculating artificial seawater system (temperature 22 ± 2°C, salinity 33 ± 1 psu (practical salinity units), pH 8.2 ± 0.2) inoculated with a multispecies culture of wild microorganisms. The system mimics a semi-tropical environment whereby, under controlled hydrodynamic and environmental conditions, marine biofilms are cultivated and subsequently grown on coated test surfaces under accelerated conditions. After 14 days, the samples were removed and tested for biofilm release in a variable-speed hydrodynamic flow-cell. The fouled microscope slides were mounted in the flow cell, and fully turbulent seawater was passed across the surfaces. The water velocity was increased incrementally from zero to 820 liters/hour, and was remained constant at each speed for 1 minute. Before each speed increment the slides were imaged and the amount of biofilm retained on the surface as a percentage of the total area (% cover) was assessed using image analysis software (ImageJ, version1.46r, Schneider et al. 2012). The percent cover of biofilm was averaged across 6 replicate slides, and mean percent cover was compared between surfaces at each speed.

The slime farm fouling settlement and release was determined for a comparison composition with hydroxyl-terminated polydimethylsiloxane as the only curable polymer, tetraethylorthosilicate (TEOS) as curing agent, and dioctyltindilaurate as curing catalyst and compositions illustrative for coating compositions according to the invention with curable polymer (i) with terminal alkoxysilyl groups as the only binder polymer, TEOS as curing agent and a curing catalyst. In Table 4, the composition of the coating compositions applied is given. The results for specific alkoxysilyl terminated polymers are shown in Table 5.

**Table 4 - Coating compositions used in slime farm test (all components in wt%)**

| | comparison | invention |
|---|---|---|
| OH-terminated PDMS | 70.9 | - |
| Alkoxysilyl terminated polymer | - | 94.5 |
| Solvent (Xylene) | 20.7 | - |
| Curing agent (tetraethylorthosilicate) | 3.2 | 5.0 |
| Pot life extender (2,4 pentadione) | 4.6 | - |
| Catalyst (dioctyltindilaurate) | 0.6 | - |
| Catalyst (K-KAT^{®} 670) | - | 0.5 |

**Table 5 - Percentage slime coverage for different coatings (slime farm test)**

| | Flow rate (liters/hour) | | |
|---|---|---|---|
| | 270 | 550 | 820 |
| | | | |
| OH-terminated PDMS (comparison) | 100 | 100 | 95 |
| STP-10 (invention) | 80 | 40 | 30 |
| STP-30 (invention) | 96 | 82 | 60 |
| STP-15 (invention) | 94 | 88 | 82 |
| STP-35 (invention) | 98 | 98 | 95 |
| S XP 2749 (invention) | 84 | 74 | 68 |

### EXAMPLE 3 - Foul release performance - biofouling test

Marine grade plywood test panels were primed with an epoxy/amine-based primer to give an average dry film thickness of about 100 µm. A tie-coat based on a polyacrylate with alkoxysilyl pendant groups (acrylic tie-coat composition 1, prepared as described in Example 4) was then applied to give an average dry film thickness of about 100µm and the tie-coat was allowed to dry. A foul release topcoat composition was then applied to the pre-treated panels in an average dry film thickness of about 150 µm.

Several topcoat compositions, each with an alkoxysilyl terminated polymer (i), a catalyst, optional curing agent (tetraethylorthosilicate), and a hydrophilic-modified polysiloxane oil were applied. As a comparison, equivalent topcoat compositions without hydrophilic-modified polysiloxane oil (incompatible fluid) were applied (comparison 1). As a further comparison, a topcoat comprising a hydroxyl-terminated polydimethylsiloxane as the curable polymer and a hydrophilic-modified polysiloxane oil was applied (comparison 2). In Table 6, the compositions of the foul release topcoat compositions are given.

**Table 6 - Coating compositions used in biofouling (all components in wt%)**

| | invention (no curing agent) | invention (with curing agent | comparison 1 (no fluid) | comparison 2 (PDMS) |
|---|---|---|---|---|
| OH-terminated PDMS | - | | | 70.6 |
| Alkoxysilyl terminated polymer | 74.6 | 69.6 | 79.6 | - |
| Solvent (naphtha) | 19.9 | 19.9 | 19.9 | 20 |
| Solvent (xylene) | | | | |
| Curing agent (tetraethylorthosilicate) | | 5 | | 3.7 |
| Catalyst | 0.5 | 0.5 | 0.5 | 0.7 |
| Poly(oxyethylene) modified polysiloxane oil* | 5 | 5 | | 5 |

| | | | | |
|---|---|---|---|---|
| * DC-57 | | | | |

The panels were then immersed in Singapore, at Changi Marina, an aquatic environment where heavy marine fouling growth is known to occur. After 1 month immersion an assessment was made of the board to quantify severity of biofouling that was present. The results (% biofouling coverage) are shown in Table 7. The panels with a topcoat with OH-terminated PDMS and poly(oxyethylene) modified polysiloxane oil (comparison 2) showed a biofouling coverage comparable with the coverage on the panels with topcoats with alkoxysilyl-terminated curable polymer and poly(oxyethylene) modified polysiloxane oil.

**Table 7 - Biofouling coverage (%) in board test**

| Test no. | curable polymer | catalyst | curing agent | biofouling coverage (%) | |
|---|---|---|---|---|---|
| | | | | fluid DC-57 | no fluid |
| 1 | STP-15 | DBU* | No | 12 | 81 |
| 2 | STP-E 15 | zinc** | yes | 15 | 80 |
| 3 | STP-E30 | zinc** | | <1 | 98 |
| 4 | STP-E10/XP 2749 (50/50) | zinc** | | 3 | 99 |
| 5 | STP-E35 | Zinc** | yes | 7 | 98 |
| 6 | STP-E35 | DBU* | | 28 | 99 |
| 7 | XP 2749 | DBU* | | 19 | 100 |

| | | | | | |
|---|---|---|---|---|---|
| * DBU: 1,8-diazabicyclo(5.4.0)undec-7-ene ** K-KAT^{®} 670 *** dioctyltindilaurate | | | | | |

### EXAMPLE 4 - Adhesion to different primers/tie-coats

For different coating compositions according to the invention, adhesion to different primers/tie-coats was determined.

### Preparation of acrylic tie-coat composition 1

A siloxane functional polyacrylate was prepared by copolymerizing a mixture of methyl methacrylate, lauryl methacrylate and trimethoxysilylpropyl methacrylate in the presence of mercaptopropyl trimethoxysilane as chain transfer agent and 2,2'azobis(2-methylbutyronitrile (AMBN) as initiator in methyl n-amyl ketone (MAK) as solvent at 100 °C. The methyl methacrylate/lauryl methacrylate/trimethoxysilylpropyl methacrylate/ mercaptopropyltrimethoxy silane molar ratio was 70/12/15/3. A solution of 70 wt% polymer in MAK was obtained.

### Preparation of acrylic tie-coat composition 2

A siloxane functional polyacrylate was prepared as described above for acrylic tie-coat composition 1, but with trimethoxysilylmethyl methacrylate instead of trimethoxysilylpropyl methacrylate.

### Commercially available primers/tie-coats used

Intershield 300 (ex. AkzoNobel): epoxy-based primer
Intergard 263 (ex. AkzoNobel): epoxy-based primer/tie-coat
Intertuf 203 (ex. AkzoNobel): vinyl-based primer
Interprotect (ex. AkzoNobel): epoxy-amine based primer
Primocon (ex. AkzoNobel): vinyl-based primer

### Coating compositions according to the invention

Five coating compositions illustrative for coating compositions according to the invention (coatings 1 to 3, 5 and 7) and two coating compositions according to the invention (coatings 4 and 6) were prepared, each with a composition as shown in Table 8.

**Table 8 - Foul release topcoats for adhesion test (all components in wt%)**

| | 1 | 2 | 3 | 4 | 5 | 6 | 7 |
|---|---|---|---|---|---|---|---|
| | | | | | | | |
| STP-E 10 | 85 | 89.5 | | | 40.5 | | 27 |
| STP E15 | | | | 37.5 | | 25 | |
| STP-E35 | | | 69.5 | | | | |
| Polyacrylate with alkoxysilyl groups* | | | | 25 | 27 | 37.5 | 40.5 |
| Adhesion promoter | 1.5 | | | | | | |
| Curing agent (tetraethylorthosilicate) | | | | 1.5 | 1.5 | 1.5 | 1.5 |
| Zinc catalyst** | 2 | 0.5 | 0.5 | 1 | 1 | 1 | 1 |
| Solvent (xylene) | 10 | 10 | 30 | | | | |
| Solvent (1-methoxy-2-propanol) | | | | 30 | 30 | 30 | 30 |
| Poly(oxyethylene) modified polysiloxane oil** | | | | 5 | | 5 | |
| Adhesion promoter (chlorinated polyolefin) | 1.5 | | | | | | |

| | | | | | | | |
|---|---|---|---|---|---|---|---|
| * Same polymer as in acrylic tie-coat composition 1 ** (K-KAT^{®} 670) *** DC-57 (ex. DOW) | | | | | | | |

### Adhesion test

A layer of a primer or tie-coat composition was applied directly to an uncoated glass panel. The applied layer was allowed to dry and a second layer of a foul release coating composition according to the invention was applied. Adhesion between the first coat (primer or tie-coat) and the second coat (foul release coat according to the invention) was determined using a penknife adhesion test. In this test, a penknife is used to cut a V-Shape into both coating layers; the level of adhesion is then assessed by inserting the point of the penknife blade under the coating at the vertex of the 'V', noting how difficult, or easy, it is to separate the second coating from the first coating.

**Table 9 - results of adhesion test**

| Primer | Foul release topcoat | | | | | | |
|---|---|---|---|---|---|---|---|
| | 1 | 2 | 3 | 4 | 5 | 6 | 7 |
| Acrylic tie-coat composition 1* | Very good | Very good | Very good | | | | |
| Acrylic tie-coat composition 2* | Very good | Very good | Very good | Very good | Very good | Very good | Very good |
| Intershield 300 | Poor | | | | | | |
| Intergard 263 | Poor | | | | | | |
| Intertuf 203 | | | Poor | | | | |
| Interprotect | | | | weak | weak | passable | passable |
| Primocon | | | | weak | weak | passable | passable |

| | | | | | | | |
|---|---|---|---|---|---|---|---|
| * applied as 70 wt% polymer in MAK | | | | | | | |

### EXAMPLE 5 - contamination

The impact of contamination of a surface with curable resin system on the aesthetic appearance of a subsequently applied polyurethane finish coat was determined as follows.

To an aluminum test panel primed with an epoxy-based primer, a diluted solution of a curable resin system (1 wt% in xylene) was applied using a 50 µm draw down bar. The resin was allowed to dry for 4 hours at ambient conditions.

Using a draw down bar, a polyurethane finish coating composition was applied on the dried coating in a wet thickness of 150 µm. The polyurethane coating composition was allowed to dry and the appearance of the polyurethane finish coat was determined. The appearance of the polyurethane finish coat was categorized as follows:
1. Coating 100% unaffected
2. 1% - 20% of surface area exhibiting surface defects
3. 21% - 50% of surface area exhibiting surface defects
4. Greater than 50% of surface area exhibiting surface defects

Surface defects may be in the form of pinholes, fish eyes, poor surface wetting or any other undesired surface characteristics.

The results are shown in Table 10.

**Table 10 - Contamination test**

| Contaminating curable resin system | Appearance polyurethane coat |
|---|---|
| 100 wt% moisture curable PDMS | 4 |
| 99.5 wt% STP-35 + 0.5 wt% zinc catalyst | 1 |
| 98.5 wt%STP-35 + 1 wt% PDMS + 0.5 wt% zinc catalyst | 2 |
| 94.5 wt%STP-35 + 5 wt% PDMS + 0.5 wt% zinc catalyst | 4 |
| 89.5 wt%STP-35 + 10 wt% PDMS + 0.5 wt% zinc catalyst | 4 |

## Claims

1. A non-aqueous liquid foul release coating composition for controlling aqueous biofouling on man-made objects, comprising:
(A) a curable resin system comprising
i) a curable polymer free of fluorine atoms and having a backbone selected from a polyurethane, a polyether, a polyester, a polycarbonate or a hybrid of two or more thereof, and having at least one terminal or pendant alkoxysilyl group of formula
-(CₘH₂ₘ)-Si(R¹)₍₃₋ₙ₎(OR²)ₙ (I)
wherein:
n is 1, 2 or 3, preferably 2 or 3;
each of R¹ and R² is, independently, an alkyl radical having 1 to 6 carbon atoms, preferably 1 to 4 carbon atoms;
m is an integer with a value in the range of from 1 to 20, and
ii) optionally a curing agent and/or a catalyst; and
(B) a marine biocide and/or a non-curable, non-volatile compound selected from the group consisting of fluorinated polymers, sterols and sterol derivatives, and hydrophilic-modified polysiloxane oils,
wherein the coating composition is essentially free of a curable polysiloxane, and wherein the coating composition is essentially free of non-curable polysiloxanes other than non-curable hydrophilic-modified polysiloxane oils.

2. A foul release coating composition according to claim 1, wherein curable polymer (i) has at least one alkoxysilyl terminal group of formula (I), preferably at least two of said terminal groups.

3. A foul release coating composition according to claim 1 or 2, wherein the at least one terminal or pendant alkoxysilyl group is attached to the backbone of the curable polymer (i) via a urethane or a urea linkage.

4. A foul release coating composition according to any one of the preceding claims, wherein m is 1 or 3, preferably 1.

5. A foul release coating composition according to any one of the preceding claims, wherein R² is a methyl or ethyl radical.

6. A foul release coating composition according to any one of the preceding claims, wherein the curable resin system comprises a curing agent selected from the group consisting of tetra-alkoxyorthosilicates and partial condensates thereof, organofunctional alkoxysilanes, and combinations thereof, preferably the curing agent is a tetra-alkoxyorthosilicate or a partial condensate thereof, an organofunctional alkoxysilane selected from the group consisting of amino alkoxysilanes, glycidoxy alkoxysilanes, methacryloxy alkoxysilanes, carbamato alkoxysilanes, and alkoxysilanes with an isocyanurate functional group, or a combination thereof.

7. A foul release coating composition according to claim 6, wherein the curing agent is an organofunctional alkoxysilane with the alkoxysilyl functionality in an alpha position to the organofunctional group, preferably the curing agent is (N,N-diethylaminomethyl)triethoxysilane, and the coating composition is essentially free of a curing catalyst.

8. A foul release coating composition according to any one of the preceding claims, wherein the coating composition is free of a marine biocide.

9. A foul release coating composition according to any one of the preceding claims, wherein the coating composition comprises a non-curable, non-volatile compound selected from the group consisting of hydrophilic-modified polysiloxane oils.

10. A foul release coating composition according to claim 9, wherein the non-curable, non-volatile hydrophilic-modified polysiloxane oil is a poly(oxyalkylene)-modified polysiloxane.

11. A substrate coated with a foul release coating composition according to any one of the preceding claims.

12. A substrate according to claim 11, wherein the substrate is coated with a multi-layer coating system comprising:
- optionally a primer layer applied to the substrate and deposited from a primer coating composition;
- a tie-coat layer applied to the substrate or to the optional primer layer, deposited from a tie-coat composition comprising a binder polymer with curable alkoxysilyl functional groups; and
- a topcoat layer applied to the tie-coat layer, the topcoat layer deposited from a liquid foul release coating composition according to any one of claims 1 to 10.

13. A substrate according to claim 11 or 12, wherein the tie-coat composition comprises a polyacrylate with curable alkoxysilyl functional groups.

14. A process for controlling aquatic biofouling on a surface of a man-made object, comprising the steps of
(a) applying a foul release coating composition according to any one of claims 1 to 10 to at least a part of the surface of the man-made object;
(b) allowing the foul release coating composition to cure to form a cured foul release coating layer; and
(c) immersing the man-made object at least partly in water.

15. A process according to claim 14, further comprising the step of applying a tie-coat layer deposited from a tie-coat composition as specified in claim 12 or 13 on the at least part of the surface of the man-made object before applying the foul release coating composition.

16. Use of a foul release coating composition according to any one of claims 1 to 10 to control aquatic biofouling on man-made objects.

## Patentansprüche

1. Nichtwässrige flüssige bewuchshemmende Beschichtungszusammensetzung zum Beherrschen von Biobewuchs in Wasser auf künstlichen Objekten, umfassend:
(A) ein härtbares Harzsystem, umfassend
i) ein härtbares Polymer, das frei von Fluoratomen ist und ein Gerüst ausgewählt aus einem Polyurethan, einem Polyether, einem Polyester, einem Polycarbonat oder einem Hybrid von zwei oder mehr davon aufweist und das wenigstens eine endständige oder Seitengruppen-Alkoxysilylgruppe der Formel
-(CₘH₂ₘ)-Si(R¹)₍₃₋ₙ₎(OR²)ₙ (I)
aufweist, wobei:
n 1, 2 oder 3, vorzugsweise 2 oder 3, ist;
jedes von R¹ und R² unabhängig ein Alkylrest mit 1 bis 6 Kohlenstoffatomen, vorzugsweise 1 bis 4 Kohlenstoffatomen, ist;
m eine ganze Zahl mit einem Wert in dem Bereich von 1 bis 20 ist; und
ii) gegebenenfalls einen Härter und/oder einen Katalysator; und
(B) ein marines Biozid und/oder eine nichthärtbare nichtflüchtige Verbindung ausgewählt aus der Gruppe bestehend aus fluorierten Polymeren, Sterolen und Sterolderivaten und hydrophil modifizierten Polysiloxanölen,
wobei die Beschichtungszusammensetzung im Wesentlichen frei von härtbarem Polysiloxan ist und wobei die Beschichtungszusammensetzung im Wesentlichen frei ist von nichthärtbaren Polysiloxanen, die von nichthärtbaren, hydrophil modifizierten Polysiloxanölen verschieden sind.

2. Bewuchshemmende Beschichtungszusammensetzung gemäß Anspruch 1, wobei das härtbare Polymer (i) wenigstens eine endständige Alkoxysilylgruppe der Formel (I), vorzugsweise wenigstens zwei der endständigen Gruppen, aufweist.

3. Bewuchshemmende Beschichtungszusammensetzung gemäß Anspruch 1 oder 2, wobei die wenigstens eine endständige oder Seitenketten-Alkoxysilylgruppe über eine Urethan-oder Harnstoffverknüpfung an das Gerüst des härtbaren Polymers (i) gebunden ist.

4. Bewuchshemmende Beschichtungszusammensetzung gemäß einem der vorstehenden Ansprüche, wobei m 1 oder 3, vorzugsweise 1, ist.

5. Bewuchshemmende Beschichtungszusammensetzung gemäß einem der vorstehenden Ansprüche, wobei R² ein Methyl-oder Ethylrest ist.

6. Bewuchshemmende Beschichtungszusammensetzung gemäß einem der vorstehenden Ansprüche, wobei das härtbare Harzsystem einen Härter ausgewählt aus der Gruppe bestehend aus Tetraalkoxyorthosilicaten und Teilkondensaten davon, organofunktionellen Alkoxysilanen und Kombinationen davon umfasst, wobei der Härter vorzugsweise ein Tetraalkoxyorthosilicat oder ein Teilkondensat davon, ein organofunktionelles Alkoxysilan ausgewählt aus der Gruppe bestehend aus Aminoalkoxysilanen, Glycidoxyalkoxysilanen, Methacryloxyalkoxysilanen, Carbamatoalkoxysilanen und Alkoxysilanen mit einer Isocyanurat-funktionellen Gruppe oder eine Kombination davon ist.

7. Bewuchshemmende Beschichtungszusammensetzung gemäß Anspruch 6, wobei der Härter ein organofunktionelles Alkoxysilan mit der Alkoxysilylfunktionalität an einer alpha-Position bezogen auf die organofunktionelle Gruppe ist, wobei der Härter vorzugsweise (N,N-Diethylaminomethyl)triethoxysilan ist und die Beschichtungszusammensetzung im Wesentlichen frei von einem Härtungskatalysator ist.

8. Bewuchshemmende Beschichtungszusammensetzung gemäß einem der vorstehenden Ansprüche, wobei die Beschichtungszusammensetzung frei von einem marinen Biozid ist.

9. Bewuchshemmende Beschichtungszusammensetzung gemäß einem der vorstehenden Ansprüche, wobei die Beschichtungszusammensetzung eine nichthärtbare nichtflüchtige Verbindung ausgewählt aus der Gruppe bestehend aus hydrophil modifizierten Polysiloxanölen umfasst.

10. Bewuchshemmende Beschichtungszusammensetzung gemäß Anspruch 9, wobei das nichthärtbare nichtflüchtige hydrophil modifizierte Polysiloxanöl ein Poly(oxyalkylen)-modifiziertes Polysiloxan ist.

11. Substrat, beschichtet mit einer bewuchshemmenden Beschichtungszusammensetzung gemäß einem der vorstehenden Ansprüche.

12. Substrat gemäß Anspruch 11, wobei das Substrat mit einem mehrschichtigen Beschichtungssystem beschichtet ist, das umfasst:
- gegebenenfalls eine Grundierungsschicht, die auf das Substrat aufgebracht und aus einer Grundierungsbeschichtungszusammensetzung abgeschieden ist;
- eine Bindeschicht, die auf das Substrat oder auf die optionale Grundierungsschicht aufgebracht ist und aus einer Bindeschichtzusammensetzung, die ein Bindepolymer mit härtbaren Alkoxysilyl-funktionellen Gruppen umfasst, abgeschieden ist; und
- eine Deckschicht, die auf die Bindeschicht aufgebracht ist, wobei die Deckschicht aus einer flüssigen bewuchshemmenden Beschichtungszusammensetzung gemäß einem der Ansprüche 1 bis 10 abgeschieden ist.

13. Substrat gemäß Anspruch 11 oder 12, wobei die Bindeschichtzusammensetzung ein Polyacrylat mit härtbaren Alkoxysilyl-funktionellen Gruppen umfasst.

14. Verfahren zur Beherrschung von Biobewuchs in Wasser auf einer Oberfläche eines künstlichen Objekts, umfassend die Schritte:
(a) Aufbringen einer bewuchshemmenden Beschichtungszusammensetzung gemäß einem der Ansprüche 1 bis 10 auf wenigstens einen Teil der Oberfläche des künstlichen Objekts;
(b) Erlauben, dass die bewuchshemmende Beschichtungszusammensetzung härtet, um eine gehärtete bewuchshemmende Beschichtung zu bilden; und
(c) wenigstens teilweises Eintauchen des künstlichen Objekts in Wasser.

15. Verfahren gemäß Anspruch 14, ferner umfassend den Schritt des Aufbringens einer Bindeschicht, die aus einer Bindeschichtzusammensetzung gemäß Anspruch 12 oder 13 abgeschieden wird, auf den wenigstens einen Teil der Oberfläche des künstlichen Objekts vor dem Aufbringen der bewuchshemmenden Beschichtungszusammensetzung.

16. Verwendung einer bewuchshemmenden Beschichtungszusammensetzung gemäß einem der Ansprüche 1 bis 10 zum Beherrschen von Biobewuchs in Wasser auf einem künstlichen Objekt.

## Revendications

1. Composition de revêtement antisalissure liquide non aqueuse pour contrôler la biosalissure aqueuse sur des objets manufacturés, comprenant :
(A) un système de résine durcissable comprenant
i) un polymère durcissable exempt d'atomes de fluor et ayant un squelette choisi parmi un polyuréthane, un polyéther, un polyester, un polycarbonate ou un hybride de deux ou plus de ceux-ci, et comportant au moins un groupe alcoxysilyle terminal ou pendant de formule
-(CₘH₂ₘ)-Si(R¹)₍₃₋ₙ₎(OR²)ₙ (I)
dans laquelle :
n est 1, 2 ou 3, de préférence 2 ou 3 ;
chacun de R¹ et R² est, indépendamment, un radical alkyle ayant 1 à 6 atomes de carbone, de préférence 1 à 4 atomes de carbone ;
m est un entier ayant une valeur dans la plage de 1 à 20, et
ii) facultativement un agent de durcissement et/ou un catalyseur ; et
(B) un biocide marin et/ou un composé non durcissable, non volatile choisi dans le groupe constitué de polymères fluorés, de stérols et dérivés de stérol, et d'huiles de polysiloxane à modification hydrophile,
la composition de revêtement étant essentiellement exempte de polysiloxane durcissable, et la composition de revêtement étant essentiellement exempte de polysiloxanes non durcissables autres que des huiles de polysiloxane à modification hydrophile non durcissables.

2. Composition de revêtement antisalissure selon la revendication 1, dans laquelle le polymère durcissable (i) comporte au moins un groupe terminal alcoxysilyle de formule (I), de préférence au moins deux desdits groupes terminaux.

3. Composition de revêtement antisalissure selon la revendication 1 ou 2, dans laquelle l'au moins un groupe alcoxysilyle terminal ou pendant est lié au squelette du polymère durcissable (i) par l'intermédiaire d'une liaison uréthane ou urée.

4. Composition de revêtement antisalissure selon l'une quelconque des revendications précédentes, dans laquelle m est 1 ou 3, de préférence 1.

5. Composition de revêtement antisalissure selon l'une quelconque des revendications précédentes, dans laquelle R² est un radical méthyle ou éthyle.

6. Composition de revêtement antisalissure selon l'une quelconque des revendications précédentes, dans laquelle le système de résine durcissable comprend un agent de durcissement choisi dans le groupe constitué de tétra-alcoxyorthosilicates et des condensats partiels de ceux-ci, d'alcoxysilanes organofonctionnels, et des combinaisons de ceux-ci, de préférence l'agent de durcissement est un tétraalcoxyorthosilicate ou un condensat partiel de celui-ci, un alcoxysilane organofonctionnel choisi dans le groupe constitué d'aminoalcoxysilanes, glycidoxyalcoxysilanes, méthacryloxyalcoxysilanes, carbamatoalcoxysilanes, et alcoxysilanes avec un groupe fonctionnel isocyanurate, ou une combinaison de ceux-ci.

7. Composition de revêtement antisalissure selon la revendication 6, dans laquelle l'agent de durcissement est un alcoxysilane organofonctionnel avec la fonctionnalité alcoxysilyle en position alpha par rapport au groupe organofonctionnel, de préférence l'agent de durcissement est le (N,N-diéthylaminométhyl)triéthoxysilane, et la composition de revêtement est essentiellement exempte de catalyseur de durcissement.

8. Composition de revêtement antisalissure selon l'une quelconque des revendications précédentes, la composition de revêtement étant exempte de biocide marin.

9. Composition de revêtement antisalissure selon l'une quelconque des revendications précédentes, la composition de revêtement comprenant un composé non durcissable, non volatile choisi dans le groupe constitué d'huiles de polysiloxane à modification hydrophile.

10. Composition de revêtement antisalissure selon la revendication 9, dans laquelle l'huile de polysiloxane à modification hydrophile non durcissable, non volatile est un polysiloxane modifié par poly(oxyalkylène) .

11. Substrat revêtu avec une composition de revêtement antisalissure selon l'une quelconque des revendications précédentes.

12. Substrat selon la revendication 11, le substrat étant revêtu d'un système de revêtement multicouche comprenant :
- facultativement une couche primaire appliquée sur le substrat et déposée à partir d'une composition de revêtement primaire ;
- une couche de liaison appliquée sur le substrat ou sur la couche primaire facultative, déposée à partir d'une composition de couche de liaison comprenant un polymère liant avec des groupes fonctionnels alcoxysilyle durcissables ; et
- une couche supérieure appliquée sur la couche de liaison, la couche supérieure étant déposée à partir d'une composition de revêtement antisalissure liquide selon l'une quelconque des revendications 1 à 10.

13. Substrat selon la revendication 11 ou 12, dans lequel la composition de couche de liaison comprend un polyacrylate avec des groupes fonctionnels alcoxysilyle durcissables.

14. Procédé de contrôle de la biosalissure aquatique sur une surface d'un objet manufacturé, comprenant les étapes de
(a) application d'une composition de revêtement antisalissure selon l'une quelconque des revendications 1 à 10 sur au moins une partie de la surface de l'objet manufacturé ;
(b) l'étape consistant à laisser la composition de revêtement antisalissure durcir pour former une couche de revêtement antisalissure durcie ; et
(c) immersion de l'objet manufacturé au moins partiellement dans de l'eau.

15. Procédé selon la revendication 14, comprenant en outre l'étape d'application d'une couche de liaison déposée à partir d'une composition de couche de liaison telle que spécifiée dans la revendication 12 ou 13 sur l'au moins une partie de la surface de l'objet manufacturé avant l'application de la composition de revêtement antisalissure.

16. Utilisation d'une composition de revêtement antisalissure selon l'une quelconque des revendications 1 à 10 pour contrôler la biosalissure aquatique sur des objet manufacturés.
